# EUROPEAN PATENT APPLICATION

(11) **EP 4 620 778 A1**
(43) Date of publication of application: **24.09.2025**
(21) Application number: 24164867.4
(22) Date of filing: 20.03.2024
(51) Int. Cl.: B62D 5/04

(54) **METHOD FOR CONTROLLING A STEERING SYSTEM FOR A VEHICLE, DATA PROCESSING APPARATUS FOR CARRYING OUT SAID METHOD, VEHICLE, COMPUTER PROGRAM, COMPUTER-READABLE MEDIUM, AND USE**

(71) Applicant: Volvo Car Corporation, 405 31 Göteborg (SE)
(72) Inventor: VESTBERG, Per, 40531 Göteborg (SE); HANSSON, Anders, 40531 Göteborg (SE); JOHANSSON, Henrik, 40531 Göteborg (SE); HÄLL, Carl-Johan, 40531 Göteborg (SE); BRANDIN, Tobias, 40531 Göteborg (SE); HULTQVIST, Johan, 40531 Göteborg (SE)
(74) Representative: Maiwald GmbH

(57) **Abstract**

The disclosure relates to a method for controlling a steering system for a vehicle. The method comprises obtaining (S310) first data indicative of a load. The method further comprises obtaining (S320) second data indicative of at least one parameter influencing the load or influencing a load capacity of the steering system. The method further comprises obtaining (S330) third data indicative of a load threshold. The load threshold is based on the second data. The method still further comprises comparing (S340) the first data and the third data, and causing a load mitigation measure if the first data and the third data indicate that the load equals or exceeds the load threshold. Furthermore, a data processing apparatus, a vehicle, a computer program, a computer-readable storage medium and a use of a load mitigation measure and/or data are presented.

## Description

### TECHNICAL FIELD

The present disclosure relates to a method for controlling a steering system for a vehicle.

The present disclosure further relates to a data processing apparatus comprising means for carrying out said method.

The present disclosure still further relates to a vehicle comprising said data processing apparatus, to a computer program, a computer-readable medium enabling to carry out said method, and a use.

### BACKGROUND ART

During operation and standstill of a vehicle, the steering system of the vehicle is subject to loads. These loads vary as a function of a plurality of influencing factors. Consequently, known steering systems need to be designed in a way that they are able to withstand these varying loads throughout their service life. Thus, the steering system needs to be mechanically stable, especially in order to withstand comparatively high loads. At the same time, steering systems shall be cost-efficient, i.e. steering systems shall be manufacturable at comparatively low costs. These objectives are conflicting with each other.

### SUMMARY

Therefore, it is an objective of the present disclosure to mitigate the above-mentioned conflict of objectives. Thus, a steering system shall be provided which is able to withstand occurring loads while, at the same time, being manufacturable at comparatively low costs.

The problem is at least partially solved or alleviated by the subject matter of the independent claims of the present disclosure, wherein further examples are incorporated in the dependent claims.

According to a first aspect, there is provided a method for controlling a steering system for a vehicle. The method comprises obtaining first data indicative of a load. The load may be a load acting in the steering system. The method further comprises obtaining second data indicative of at least one parameter influencing the load or influencing a load capacity of the steering system. The load capacity may be understood to represent a load bearing capacity, i.e. a load capacity that the steering system may bear. The method further comprises obtaining third data indicative of a load threshold, wherein the load threshold is based on the second data. The load threshold may be understood to represent a load bearing threshold, i.e. a threshold up to which a load, e.g. acting on the steering system, is considered bearable. The method still further comprises comparing the first data and the third data, and causing a load mitigation measure if the first data and the third data indicate that the load equals or exceeds the load threshold. If, however, the first data and the third data indicate that the load is below the load threshold, no load mitigation measure is caused and the method may return to the obtaining of the first data.

When executing the present method, i.e. when controlling the steering system for the vehicle, a load mitigation measure may be caused to mitigate the load, for example the load acting in the steering system. For example, execution of the method may allow to mitigate an impact of extreme loads, i.e. resulting from an extreme use case, to the steering system. In simplified words, the load is reduced in case the load is found to exceed the load threshold. In this context, the fact that the load threshold is based on the second data means that the load threshold is a function of a parameter influencing the load or influencing the load capacity of the steering system. This means that the load threshold is variable and can be different in different operational situations of the steering system which may be described by the second data. Thus, using the present method, the steering system may be protected from overload since a potential overload is detected and mitigated. This may be used when designing the steering system. Hence, in contrast to known steering system, the steering system may not necessarily be designed to withstand the most extreme loads, i.e. to be fully operational in the most extreme use cases. Rather, in such use cases, the extreme load may be mitigated using the present method. Thus, from a purely mechanical point of view, the steering system does not need to be able to withstand these extreme loads. In more detail, the steering system does not need to be mechanically dimensioned to withstand these extreme loads and extreme use cases. Due to the method of the present disclosure, however, instead of addressing such extreme loads and such extreme use cases in a purely mechanical manner by dimensioning the steering system accordingly, the method according to the present disclosure enables to mitigate impacts of these loads on the steering system without compromising on the performance and premium experience of the steering system during usage. Thus, since the impact of such extreme load and such extreme use cases may be mitigated by the present method, a lighter, simpler, more resource-efficient and more cost-efficient steering system may be used for a vehicle.

In the context of the present disclosure, the steering system may be an Electrical Power Assisted Steering (EPAS) system or a Steer by Wire (SbW) system, for example.

The method according to the present disclosure may be executed by a fully autonomous vehicle or by a partly autonomous vehicle. Thus, the method may be executed in the context of autonomously operating the steering system. Alternatively, the method may be executed at a location remote from the vehicle, but from the perspective of the vehicle. The location remote from the vehicle may be a cloud server.

According to an example of the disclosure, the first data may be indicative of a road wheel angle. In this context, a road wheel angle describes an angle by which the road wheels are inclined with respect to an orientation which is associated with the vehicle driving straight ahead or straight backwards.

It shall be noted that a load occurring in the steering system may increase as a function of the road wheel angle. More precisely, the load acting in the steering system may be higher the higher is the road wheel angle. Hence, the road wheel angle may be indicative of a load acting in the steering system. Consequently, the third data, i.e. the load bearing threshold, may as well be described as a road wheel angle, e.g. a maximum road wheel angle. As has been explained before, the third data is based on the second data. Thus, the second data may relate to a parameter influencing the maximum road wheel angle. Hence, in case a road wheel angle equaling or exceeding the maximum road wheel angle, a load mitigation measure may be caused to mitigate the associated load. Data indicative of a road wheel angle usually is available in a steering system and may be provided in a reliable manner. Thus, providing first data indicative of a road wheel angle renders the method of the present disclosure simple and reliable.

According to another example of the disclosure, the second data may be indicative of at least one of an ambient temperature around the vehicle, a ground angle of a ground on which the vehicle is located, a ground friction of the ground, a vehicle specification, and a vehicle condition. The ambient temperature may act on the steering system. This may cause a thermal load and/or a mechanical load resulting from a thermal effect within the steering system. This may increase a mechanical load acting on the steering system due to its operation. Moreover, the thermal load and/or mechanical effect resulting therefrom may influence the load capacity. The ground angle describes an inclination of the ground on which the vehicle is located. Thus, a load acting on the steering system and resulting its operation may be a function of the ground angle. In an example in which the vehicle is operated on a steep, i.e. strongly inclined, road, a load acting on the steering system may be increased. The same applies to a load capacity. A ground friction may be described by a friction coefficient acting between the tires of the vehicle and the ground on which the vehicle is operated. This has an effect on the load and the load capacity since turning wheels having tires on a high-friction ground requires a higher steering force than turning wheels having tires on a low-friction ground. The vehicle specification relates to a feature or setting of the vehicle, e.g. a type of tires used on the vehicle or a weight of the vehicle. The vehicle condition describes a current condition of the vehicle, e.g. an operational state or a wear state of the vehicle. Thus, second data indicative of at least one parameter influencing the load or influencing a load bearing capacity of the steering system may be provided in an accurate manner. This allows to provide third data in an accurate manner. Consequently, an appropriate load mitigation measure may be caused if needed.

According to another example of the disclosure, the vehicle condition may comprise at least one of a vehicle speed, a vehicle pitch, a steering wheel angle, and a steering wheel torque.

All of these parameters influence the load or the load capacity of the steering system. Hence, the load may be determined and/or estimated with high accuracy for several different situations and/or environments in which the vehicle may be operated. These situations may be described with high accuracy using the above-mentioned parameters. Thus, extreme load and extreme use cases may be mitigated in all of these several different situations.

According to another example of the disclosure, the load mitigation measure may comprise releasing a brake associated with at least one road wheel of the vehicle. Additionally or alternatively, the load mitigation measure may comprise limiting a range of motion of a steering system component. Additionally or alternatively, the load mitigation measure may further comprise reducing an assistance measure of the steering system. All these measures are able to reduce a load acting on the steering system or in the steering system. Thus, the load may be effectively mitigated or reduced.

It shall be noted that the different load mitigation measures may be applied alone or in any combination, as appropriate.

According to another example of the disclosure, limiting a range of motion of a steering system component may comprise limiting a range of motion of a steering rack.

It shall be noted that the steering rack may be movable in a range between a first end point and a second end point, wherein the first end point and the second end point are arranged substantially symmetrical about a rest position or origin position. The rest position or origin position may be associated with the vehicle driving straight ahead or straight backwards. Thus, the more the steering rack is positioned toward the first end point or towards the second end point, the higher a rack force may be. The rack force is a force acting on the steering rack. This effect may occur with the load increasing with an increasing road wheel angle as has already been described above. Hence, limiting the range of motion of the steering rack may mitigate the rack force and, thus, a load acting in the steering system.

According to another example of the disclosure, the load mitigation measure may be based on a vehicle speed and/or on a road wheel angle.

It shall be noted that a higher vehicle speed may imply a higher load acting in the steering system. It shall further be noted that a road wheel angle may imply a certain steering rack position. Consequently, basing the load mitigation measure on the vehicle speed and/or the road wheel angle allows to provide an appropriate and effective load mitigation.

According to another example of the disclosure, the third data may further be indicative of a load warning threshold. The method may further comprise comparing the first data and the third data, and causing a load mitigation transition measure if the first data and the third data indicate that the load equals or exceeds the load warning threshold. Thus, in this example, the third data is indicative of both a load warning threshold and a load threshold. The load mitigation transition measure is caused if the first data and the third data indicate that the load equals or exceeds the load warning threshold. The load mitigation measure is caused if the first data and the third data indicate that the load equals or exceeds the load threshold. In this context, a load mitigation transition measure is a transitional measure that bridges a situation in which no load mitigation measure is caused or applied and a situation in which a load mitigation measure is caused or applied. In an example, the load mitigation transition measure may relate to ramping up or smoothly introducing the load mitigation measure. Additionally or alternatively, it is possible that the load mitigation transition measure comprises preparatory measures that are executed before the actual load mitigation measure is caused. Thus, by causing a load mitigation transition measure, a smooth transition towards a situation in which a load mitigation measure is caused is ensured. Moreover, overload of the steering system is avoided with high reliability since the load mitigation transition measure is already caused before the load actually equals or exceeds the load threshold.

In an example in which the load mitigation measure comprises releasing a brake associated with at least one road wheel of the vehicle, the load mitigation transition measure may comprise releasing the brake to a reduced extent as compared to the release associated with the load mitigation measure.

In an example in which the load mitigation measure comprises limiting a range of motion of a steering system component, the load mitigation transition measure may comprise limiting the range of motion of the steering system component in a reduced extent. Thus, the limitation associated with the load mitigation measure may be achieved by a continuous transition or step-wise.

In an example in which the load mitigation measure comprises reducing an assistance measure of the steering system, the load mitigation transition measure may comprise reducing the assistance measure in a reduced extent. Thus, the reduction associated with the load mitigation measure may be achieved by a continuous transition or step-wise.

According to another example of the disclosure, the load warning threshold may be based on at least one of a steering wheel angle, a steering wheel speed, a steering wheel acceleration, a steering wheel torque, and a vehicle speed. In other words, the load warning threshold may be a function of at least one of a steering wheel angle, a steering wheel speed, a steering wheel acceleration, a steering wheel torque, and a vehicle speed. Thus, the load warning threshold may vary depending on any one or more the these parameters. Thus, for each operational situation of the vehicle, an appropriate load warning threshold may be provided.

According to another example of the disclosure, the method may further comprise causing the vehicle to stand still. This is a reliable way to mitigate a load acting on or in the steering system.

In order to cause the vehicle to stand still, brakes associated with one or more wheels may be engaged.

The method according to the first aspect may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus comprising means for carrying out the method according to the first aspect.

Thus, using such a data processing apparatus may allow to mitigate an impact of extreme loads, i.e. resulting from an extreme use case, to the steering system. In simplified words, the load is reduced in case the load is found to exceed the load threshold. In other words, using the data processing apparatus, the steering system may be protected from overload since a potential overload is detected and mitigated. This may be used when designing the steering system. Hence, in contrast to known steering system, the steering system may not necessarily be designed to withstand the most extreme loads, i.e. to be fully operational in the most extreme use cases. Rather, in such use cases, the extreme load may be mitigated using the present data processing apparatus. Thus, from a purely mechanical point of view, the steering system does not need to be able to withstand these extreme loads. In more detail, the steering system does not need to be mechanically dimensioned to withstand these extreme loads and extreme use cases. Due to the data processing apparatus of the present disclosure, however, instead of addressing such extreme loads and such extreme use cases in a purely mechanical manner by dimensioning the steering system accordingly, the data processing apparatus according to the present disclosure enables to mitigate impacts of these loads on the steering system without compromising on the performance and premium experience of the steering system during usage. Thus, since the impact of such extreme load and such extreme use cases may be mitigated by the present data processing apparatus, a lighter, simpler, more resource-efficient and more cost-efficient steering system may be used for a vehicle.

According to a third aspect, there is provided a computer program comprising instructions which, when the program is executed by a computer, cause the computer to carry out the method according to according to the first aspect.

Thus, using such a computer program may allow to mitigate an impact of extreme loads, i.e. resulting from an extreme use case, to the steering system. In simplified words, the load is reduced in case the load is found to exceed the load threshold. In other words, using the computer program, the steering system may be protected from overload since a potential overload is detected and mitigated. This may be used when designing the steering system. Hence, in contrast to known steering system, the steering system may not necessarily be designed to withstand the most extreme loads, i.e. to be fully operational in the most extreme use cases. Rather, in such use cases, the extreme load may be mitigated using the present computer program. Thus, from a purely mechanical point of view, the steering system does not need to be able to withstand these extreme loads. In more detail, the steering system does not need to be mechanically dimensioned to withstand these extreme loads and extreme use cases. Due to the computer program of the present disclosure, however, instead of addressing such extreme loads and such extreme use cases in a purely mechanical manner by dimensioning the steering system accordingly, the computer program according to the present disclosure enables to mitigate impacts of these loads on the steering system without compromising on the performance and premium experience of the steering system during usage. Thus, since the impact of such extreme load and such extreme use cases may be mitigated by the present computer program, a lighter, simpler, more resource-efficient and more cost-efficient steering system may be used for a vehicle.

According to a fourth aspect, there is provided a computer-readable storage medium comprising instructions which, when executed by a computer, cause the computer to carry out the method according to the first aspect. Additionally or alternatively, there is provided the computer-readable storage medium having stored the computer program of the third aspect.

Thus, using such a computer readable storage medium may allow to mitigate an impact of extreme loads, i.e. resulting from an extreme use case, to the steering system. In simplified words, the load is reduced in case the load is found to exceed the load threshold. In other words, using the computer readable storage medium, the steering system may be protected from overload since a potential overload is detected and mitigated. This may be used when designing the steering system. Hence, in contrast to known steering system, the steering system may not necessarily be designed to withstand the most extreme loads, i.e. to be fully operational in the most extreme use cases. Rather, in such use cases, the extreme load may be mitigated using the present computer readable storage medium. Thus, from a purely mechanical point of view, the steering system does not need to be able to withstand these extreme loads. In more detail, the steering system does not need to be mechanically dimensioned to withstand these extreme loads and extreme use cases. Due to the computer readable storage medium of the present disclosure, however, instead of addressing such extreme loads and such extreme use cases in a purely mechanical manner by dimensioning the steering system accordingly, the computer readable storage medium according to the present disclosure enables to mitigate impacts of these loads on the steering system without compromising on the performance and premium experience of the steering system during usage. Thus, since the impact of such extreme load and such extreme use cases may be mitigated by the present computer readable storage medium, a lighter, simpler, more resource-efficient and more cost-efficient steering system may be used for a vehicle.

According to a fifth aspect, there is provided a use of a load mitigation measure and/or of data indicative of at least one parameter influencing a load, for example a load acting in a steering system for a vehicle, or indicative of at least one parameter influencing a load capacity of the steering system for operating a steering system of a vehicle. The data may represent such second data as outlined above with reference to the first aspect. The load capacity may be understood to represent a load bearing capacity, i.e. a load capacity that the steering system may bear.

Thus, an impact of extreme loads, i.e. resulting from an extreme use case, to the steering system may be mitigated. In simplified words, the load may be reduced in case the load is found to exceed the load threshold. In other words, the steering system may be protected from overload since a potential overload is detected and mitigated. This may be used when designing the steering system. Hence, in contrast to known steering system, the steering system may not necessarily be designed to withstand the most extreme loads, i.e. to be fully operational in the most extreme use cases. Rather, in such use cases, the extreme load may be mitigated. Thus, from a purely mechanical point of view, the steering system does not need to be able to withstand these extreme loads. In more detail, the steering system does not need to be mechanically dimensioned to withstand these extreme loads and extreme use cases. Due to the use of the present disclosure, however, instead of addressing such extreme loads and such extreme use cases in a purely mechanical manner by dimensioning the steering system accordingly, the use according to the present disclosure enables to mitigate impacts of these loads on the steering system without compromising on the performance and premium experience of the steering system during usage. Thus, since the impact of such extreme load and such extreme use cases may be mitigated by the present use, a lighter, simpler, more resource-efficient and more cost-efficient steering system may be used for a vehicle.

According to a sixth aspect, there is provided a vehicle, which comprises a steering system and a data processing apparatus according to the second aspect.

Thus, using such a vehicle may allow to mitigate an impact of extreme loads, i.e. resulting from an extreme use case, to the steering system of the vehicle. In simplified words, the load is reduced in case the load is found to exceed the load threshold. In other words, using the vehicle, the steering system of the vehicle may be protected from overload since a potential overload is detected and mitigated. This may be used when designing the steering system. Hence, in contrast to known steering system, the steering system of the vehicle may not necessarily be designed to withstand the most extreme loads, i.e. to be fully operational in the most extreme use cases. Rather, in such use cases, the extreme load may be mitigated using the present vehicle. Thus, from a purely mechanical point of view, the steering system does not need to be able to withstand these extreme loads. In more detail, the steering system of the vehicle does not need to be mechanically dimensioned to withstand these extreme loads and extreme use cases. Due to the vehicle of the present disclosure, however, instead of addressing such extreme loads and such extreme use cases in a purely mechanical manner by dimensioning the steering system accordingly, the vehicle according to the present disclosure enables to mitigate impacts of these loads on the steering system without compromising on the performance and premium experience of the steering system during usage. Thus, since the impact of such extreme load and such extreme use cases may be mitigated by the present vehicle, a lighter, simpler, more resource-efficient and more cost-efficient steering system may be used for the vehicle.

It should be noted that the above examples may be combined with each other irrespective of the aspect involved. Accordingly, the method may be combined with structural features and, likewise, the apparatus may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle comprising a steering system, wherein the steering system comprises a data processing apparatus according to the present disclosure, a computer program according to the present disclosure and a computer-readable storage medium according to the present disclosure such that a method according to the present disclosure for controlling the steering system may be executed;
- Figure 2: shows the steering system of the vehicle of Figure 1 in more detail;
- Figure 3: shows a flowchart illustrating the method for controlling the steering system; and
- Figure 4: shows a diagram illustrating a rack force as a function of a rack position, wherein the associated rack forms part of the steering system as shown in Figure 2.

### DETAILED DESCRIPTION

The Figures are merely schematic representations and serve only to illustrate examples of the disclosure. Identical or equivalent elements are in principle provided with the same reference signs.

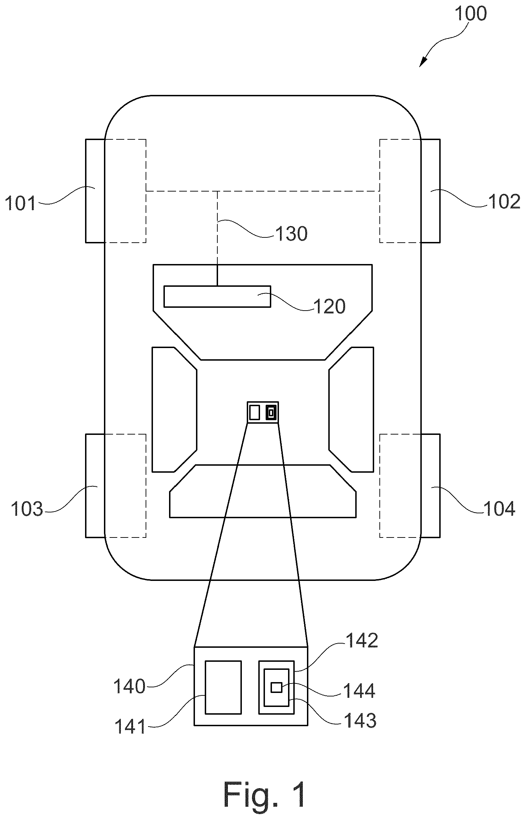

Figure 1 shows a vehicle 100. The vehicle comprises a front left road wheel 101, a front right road wheel 102, a rear left road wheel 103 and a rear right road wheel 104. The vehicle 100 further comprises a steering means 120, which enables a vehicle driver to steer the vehicle 100 in a desired direction. For example, the steering means 120 may be a steering wheel which the vehicle driver may turn left or right in order to steer the vehicle into a left direction or a right direction.

Thus, steering instructions which the vehicle driver provides via the steering means 120 are transmitted to the vehicle's steered wheels. For example, the vehicle's steered wheels may be the front left road wheel 101 and the front right road wheel 102. The transmission of the vehicle driver's steering instructions may be performed via a steering system, which is schematically indicated in Figure 1 by the dashed lines 130.

The steering system 130 further comprises a data processing apparatus 140. Despite the fact that the data processing apparatus 140 forms part of the steering system 130 the data processing apparatus 140 is represented at a position separate from the dashed lines 130. This is done for the ease of representation.

The data processing apparatus 140 comprises a data storage unit 142 and a data processing unit 141.

The data storage unit 142 comprises a computer-readable storage medium 143.

On the computer-readable storage medium 143, there is provided a computer program 144.

The computer program 144 and, thus, also the computer-readable storage medium 143, comprise instructions which, when executed by the data processing unit 141, or, more generally speaking, a computer, cause the computer or the data processing unit 141 to carry out a method for controlling a steering system of the vehicle 100.

Hence, the data processing apparatus 140 is communicatively connected with at least one of the vehicle's steered wheels or brakes.

Consequently, the data storage unit 142 and the data processing unit 141 form means for carrying out a method for controlling a steering system for a vehicle.

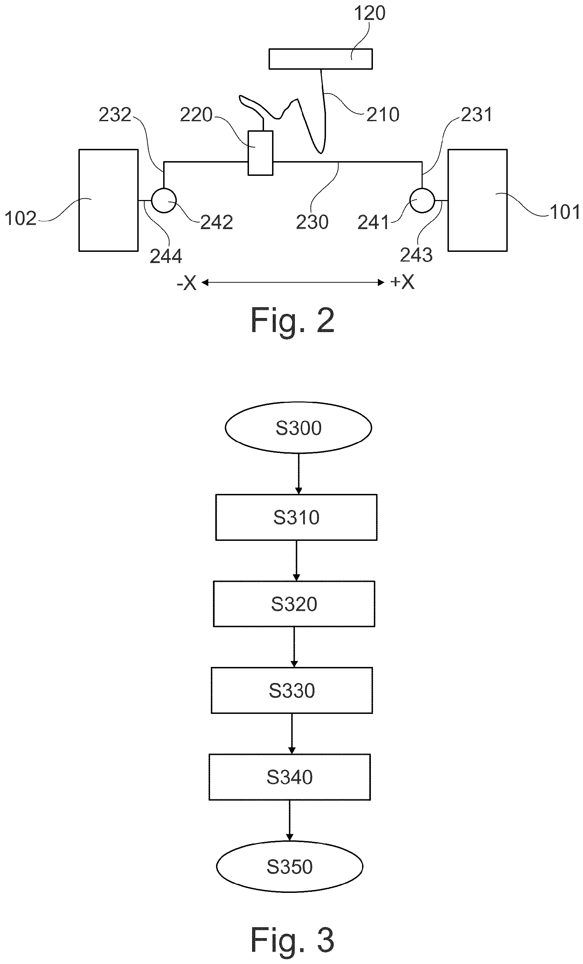

In Figure 2, the steering system 130 is illustrated in more detail.

In the present example, the steering system 130 is a steer-by-wire system.

Thus, the steering means 120 is communicatively connected to a steering gear electric motor 220 via a wire 210. The steering means 120 and the steering gear electric motor do not have a mechanical connection.

The steering gear electric motor 220 is drivingly coupled to a steering gear rack bar or steering rack 230.

A first end of the steering rack 230 is drivingly coupled to the front left road wheel 101 via a steering tie rod 231, a knuckle pin 241, and a steering knuckle 243.

A second end of the steering rack 230 is drivingly coupled to the front right road wheel 102 via a steering tie rod 232, a steering knuckle pin 242, and a steering knuckle 244.

In the example of Figure 2, the steering instructions or the driver input received from the vehicle driver via the steering means 120 are transferred to the steering gear electric motor 220 through the wire 210 connecting the steering means 120 and the steering gear electric motor 220. The steering gear electric motor 220 applies a torque or force associated with and derived from the steering instructions onto the steering rack 230. Such that the steering rack 230 translationally moves along an x axis.

The movement of the steering rack 230 is transferred to the front left road wheel 101 and the front right road wheel 102 via the steering tie rods 231 and 232, the steering knuckle pins 241 and 242, and the steering knuckles 243 and 244.

It shall be noted that although there is indicated a Steer by Wire (SbW) system in Figure 2, also a steering system 130 comprising a mechanical connection between the steering means 120 and the steering rack 230 may be used. Such a steering system may comprise an Electrical Power Assisted Steering (EPAS) system.

It shall be noted that usually a steering gear rack force or rack force increases during a movement of the steering rack 230 toward a maximum rack travel position of the steering system, i.e. an end stop position on the positive x axis or an end stop position on the negative x axis. The maximum rack travel position on the positive x axis and the maximum rack travel position on the negative x axis are arranged substantially symmetrically around a rest position or origin position of the steering rack 230. The origin position of the steering rack 230 is associated with the vehicle 100 driving straight ahead or straight backwards.

The maximum rack travel positions may be understood to represent a first and second end point respectively. Hence, the maximum rack travel position may represent an end position, at which no further movement of the steering rack 230 away from the origin position is possible or enabled. Hence, the maximum rack travel position may be associated with a maximum steering angle corresponding to a maximum rotation angle of the front road wheels 101 and 102. In addition, a design of the vehicle 100, a weight of the vehicle 100, a width of the front road wheels 101 and 102, a ground angle and a ground friction may contribute to the rack force increasing towards the end positions.

As has been mentioned before, the data processing apparatus 140 comprises means for carrying out a method for controlling a steering system of the vehicle 100.

This method will be explained in the following with reference to Figure 3.

In S300, the method is started. This may comprise that the vehicle 100 is started.

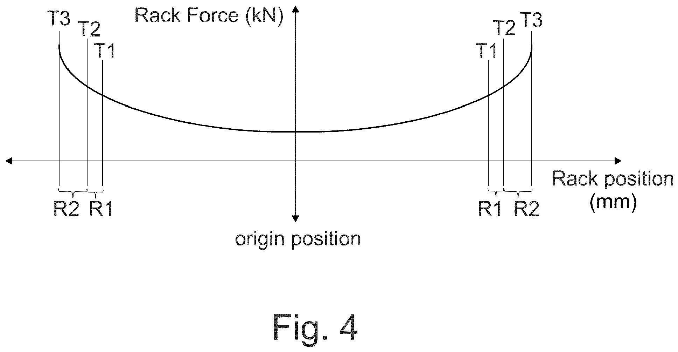

In S310, the method comprises obtaining first data indicative of a load. The load may be a load acting in the steering system 130. The first data may be indicative of a road wheel angle, i.e. of an angle of at least one steered wheel, like of one of the front road wheels 101 and 102, for example. This will be explained in further detail and with reference to Figure 4 further below. The first data may be obtained continuously, for example through continuous measurement and/or continuous estimation of the first data. Hence, a value and/or amount of the load may be determined or estimated with high accuracy.

In S320, the method comprises obtaining second data indicative of at least one parameter influencing the load or influencing a load capacity of the steering system. The load capacity may be understood to represent a load bearing capacity, i.e. a load capacity that the steering system 130 may bear. The second data may be indicative of at least one of an ambient temperature around the vehicle 100, a ground angle of a ground on which the vehicle 100 is located, a ground friction of the ground, a vehicle specification, and a vehicle condition. The vehicle specification may comprise at least one of a type or status of the tires on the wheels 101 to 104, a weight of the vehicle 100 further comprising a weight of vehicle occupants and luggage, for example, and a battery type of the vehicle 100. The vehicle condition may comprise at least one of a vehicle speed, a vehicle pitch, an input received from the steering means 120, like a steering wheel angle for example, and a steering wheel torque. Hence, due to the variety of such different data being obtained, the load may be determined and/or estimated with high accuracy in different situations in which the vehicle 100 may be.

In S330, the method comprises obtaining third data indicative of a load threshold, wherein the load threshold is based on the second data. The load threshold may be understood to represent a load bearing threshold, i.e. a threshold up to which a load is considered bearable.

For example, it may be determined, based on the first data, that a rack force is at a certain level, for example at or above 12.5kN. Further, based on the second data, it may be determined, from a predetermined fixed value or based on the specific situation in which the vehicle 100 may be in, that the load capacity of the steering system may be close to the certain level, for example may be at 12.7kN. For example, in case the ground angle of the ground on which the vehicle 100 is located may exceed a predetermined ground angle value, for example in case the vehicle 100 travels downhill, in case the corresponding ground friction may exceed a predetermined ground friction value, for example in case the ground comprises gravel, and in case the weight of the vehicle 100 exceeds a predetermined weight, for example in case the vehicle 100 may be fully loaded, then the load capacity of the steering system may be influenced by such situation that the resulting load capacity may be determined to be at 12.7kN. Furthermore, based on the obtained third data, the load threshold may be determined. Accordingly, the load threshold may be a predetermined fixed value or may be below the determined load capacity by a predetermined percentage or by a predetermined fixed value. For example, the load threshold may be determined to be at 12.6kN, i.e. to be below the load capacity at 12.7kN. However, the load threshold may be equal to the load capacity.

In S340, the method comprises comparing the first data and the third data, and causing a load mitigation measure if the first data and the third data indicate that the load equals or exceeds the load threshold. If the first data and the third data indicate that the load is below the load threshold, the method returns to S310.

For example, the rack force, which was determined to be at 12.5kN, is compared to the load threshold, which was determined to be at 12.6kN. Hence, the rack force is below the load threshold. Thus, no load mitigation measures may be caused. On the other hand, under the assumption that the load threshold may be determined to be below or equal to the determined rack force, for example in case the load threshold may be determined to be 12.5kN, then a load mitigation measure for mitigating the rack force is caused.

Hence, the load mitigation may be performed in a gradual or stepwise process. Hence, the load may be mitigated gradually or stepwise before the load capacity is reached. Thus, convenience for a vehicle driver is increased. Accordingly, an abrupt or immediate application of several load mitigation measures at once, which may make the vehicle drive to feel uncomfortable, is avoided, for example.

Moreover, the third data may further be indicative of a load warning threshold. Hence, the method according to Figure 3 may further comprise comparing the first data and the third data, and causing a load mitigation transition measure if the first data and the third data indicate that the load equals or exceeds the load warning threshold. For example, such load warning threshold may be below the load threshold. The load warning threshold may be a predetermined fixed value or may be a value to be determined relative to the load threshold, for example to differ from the load threshold by a predetermined percentage or by a predetermined fixed value. For example, the load warning threshold may be determined to be at 12.5kN, wherein the load threshold was determined to be at 12.6kN. However, the load warning threshold may be equal to the load threshold. Hence, in case the rack force, which was determined to be at 12.5kN, is compared to the load warning threshold, which may be determined to be at 12.5kN, a load mitigation transition measure may be caused. No load mitigation transition measure may be caused in case the load warning threshold may be determined to be above the rack force.

Hence, the load mitigation may be performed in a finer gradual or finer stepwise process before the load capacity is reached. Thus, convenience for a vehicle driver is further increased. Accordingly, an abrupt or immediate application of several load mitigation measures at once, which may make the vehicle drive to feel uncomfortable, is avoided more reliably, for example.

It shall be noted that the load warning threshold may be based on at least one of a steering wheel angle, a steering wheel speed, a steering wheel acceleration, a steering wheel torque, and a vehicle speed.

The load mitigation measure comprises at least one of releasing a brake associated with at least one road wheel 101 to 104 of the vehicle 100, limiting a range of motion of a steering system component, and reducing an assistance measure of the steering system.

It shall be noted that limiting a range of motion of a steering system component may comprise limiting a range of motion of a steering rack 230.

Optionally, the method according to Figure 3 may further comprise causing the vehicle 100 to stand still.

In S350, the method ends, for example in case the vehicle 100 is turned off, or returns to S310.

Hence, when executing the method according to Figure 3, i.e. when controlling the steering system 130 for the vehicle 100, a load mitigation measure may be caused to mitigate the load. The load may be a load acting in the steering system 130. Thus, execution of the method may allow to mitigate an impact of extreme loads and extreme use cases to the steering system 130. Hence, the steering system 130 may not necessarily be designed to physically withstand such extreme loads and such extreme use cases.

A relationship between a position of the steering rack 230, i.e. a rack position, and a resulting rack force is schematically illustrated in Figure 4. The rack force is the force applied in order to turn the road wheels, for example the front road wheels 101 and 102. The steering rack 230 is, based on a vehicle driver operating the steering means 120 and/or a steering gear electric motor 220, moving left or right depending on the input from the vehicle driver or active systems such as autonomous driving (AD) and Advanced Driver Assistance Systems (ADAS), pushing on the wheel suspension knuckles or steering knuckles 241, 242 and by this turning the road wheels 101, 102.

In the representation of Figure 4, a minimum rack force is indicated to occur at an origin position or origin rack position of the steering rack 230. Such origin rack position may be associated with the vehicle 100 traveling along straightly or along the vehicle's longitudinal direction. The more the rack position of the steering rack 230 deviates from the origin rack position, the more the rack force increases. Thus, the rack force, due to a geometry of the wheel suspension, increases as the rack bar or steering rack 230 is moving towards its most outward position, i.e. the steering system's maximum travel or end point position or the steering system's maximum steering angle. The increase of the rack force is illustrated to be symmetrical around the origin rack position. However, in other examples, the rack force may increase differently on one side from the origin rack position in comparison to the other side of the origin rack position.

The diagram of Figure 4 further shows first ranges R1 and second ranges R2, as well as thresholds T1, T2 and T3 both on the positive x axis and on the negative x axis. The first ranges R1 may indicate ranges in which a load mitigation transition measure may be caused. The second ranges R2 may indicate ranges in which a load mitigation measure may be caused.

Load mitigation transition measures may comprise the same measures as the load mitigation measures, but may, for example, vary in intensity. For example, as a load mitigation transition measure, a brake on one front wheel, like the front left road wheel 101 may be released, wherein as a load mitigation measure, a brake on both front wheels, like the front left and right road wheels 101 and 102 may be released. Additionally or alternatively, a motion range of the steering rack 230 and/or a servo assistance may be reduced, for example, wherein the reduction may be stronger or may limit the steering system to a greater extent for a load mitigation measure than it may for a load mitigation transition measure. Hence, the threshold T1 may represent the load warning threshold, the threshold T2 may represent the load threshold and the threshold T3 may represent the load capacity.

For example, a release of the brakes may be caused when the rack position of the steering rack 230 is within the second range R2, which may be understood to represent a Peak Force Area (PFA). However, in order to achieve a smooth transition into the second range, a brake release may already happen in the first range. The first range R1 may thus be understood to represent a Pre Peak Force Area (PPFA). The setting of the first range may be based on at least one of a steering wheel speed, a steering wheel acceleration, and a steering wheel torque rate.

It shall be noted that the release of the brake may be based on the application of a brake release algorithm, which may output a release brake request in case it may be determined that at least one road wheel brake has to be released.

Additionally, it is noted that the brake of a steered wheel is may only be released in the context of a load mitigation measure or a load mitigation transition measure, if a desired stand still of the vehicle 100 or a desired deceleration of the vehicle 100 may be achieved using the remaining brakes, i.e. the brakes acting on the non-steered wheels.

For example, the brake release algorithm may receive, as input, a rack position and a vehicle speed. In addition, the brake release algorithm may further receive, as additional input, at least one of a rack position speed, a rack position acceleration, a steering wheel torque, a vehicle pitch, a brake applied status related to the brakes of the road wheels 101 to 104, a surface friction related to the ground surface at which the vehicle 100 is located, a vehicle configuration, a rack force-model indicative of the capabilities of the steering system of the vehicle and a rack force-model indicative of at least one calculation or estimation method for determining or estimating a rack force. It shall be noted that the surface friction or a surface friction level indicative of the surface friction may be estimated or measured continuously.

Based on the input, the brake release algorithm may acquire predetermined data patterns or predetermined rules for mapping the received input onto the predetermined data patterns and/or for evaluating the received input against the predetermined rules to determine whether or not to output the release brake request.

According to another example of the present disclosure, based on the method as outlined above with reference to Figure 3, several steps may be performed in a specific example for controlling the steering system for the vehicle 100.

For example, Steps S310, S320 and S330 may comprise that data and/or models are acquired from a database, from appropriate sensors arranged at the vehicle 100 and/or from the data processing apparatus 140. The data and/or models may comprise the first data, the second data and/or the third data. The data and/or models may be indicative of at least one of a vehicle setup and an environment around the vehicle 100, for example an ambient temperature around the vehicle 100, of a design of the steering system of the vehicle 100, for example a type of the steering system or a size and/or performance of an assistance motor, like a size and/or performance of the steering gear electric motor 220 for example, of the steering system, and of a rack force-model for determining and/or estimating the rack force. Therefore, the data and/or models may be indicative of a steering capability associated with the steering system of the vehicle 100.

Optionally, based on the acquired data and/or models, the second range R2 may then be determined, in case the second rage R2 is not already given in the acquired data and/or models. The second range R2 may be determined relative to a load capacity of the steering system. The load capacity may be understood to represent a load bearing capacity, i.e. a load capacity that the steering system may bear.

Subsequently, in a further optional step, based on the second range R2, the first range R1 may be determined, in case the first range R1 is not already given in the acquired data and/or models. The first range R1 may be determined relative to the second range R2. Determination of the first range R1 may additionally or alternatively be related to a steered wheel speed and/or a steered wheel acceleration.

In the following, according to the specific example, several examples are given for Step S340 according to Figure 3. In particular, several examples are given for the comparison of first data with third data. In this specific example, several such comparisons are performed one after another, which may result in a specific load mitigation measure being performed. An order and/or number of different comparisons is not limited to such order and/or number of different comparisons as outlined below.

For example, it is determined whether a rack position of the steering rack 230 has exceeded the first range R1, i.e. may be within the second range R2. Hence, it is determined whether a steered wheel angle provided by the steering system is at an angle associated with a rack position exceeding the first range R1. If the determination is positive, a next processing step is performed. Otherwise, the process returns back to the step of acquisition of the data and/or models.

As an example for a following processing step, it is determined whether a vehicle speed in a longitudinal direction of the vehicle 100 is below a predetermined speed threshold value. If the determination is positive, a next processing step is performed. Otherwise, the process returns back to the step of acquisition of the data and/or models.

As an example for a further following processing step, it is determined whether a torsion bar torque is above a predetermined torsion bar torque threshold value. If the determination is positive, a next processing step is performed. Otherwise, the process returns back to the step of acquisition of the data and/or models.

As an example for a further following processing step, it is determined whether a brake to at least one of the steered road wheels is applied. If the determination is positive, a next processing step is performed. Otherwise, the process returns back to the step of acquisition of the data and/or models.

As an example for a further following processing step, it is determined whether the vehicle pitch is below a predetermined vehicle pitch threshold value. For example, the predetermined vehicle pitch threshold value may be an angle, for example an angle of a few degrees, like for example an angle in a range from 1 degree to 5 degrees, relative to a horizontal plane for example. If the determination is positive, the brake to the at least one of the steered road wheels is released and a next processing step is performed. Otherwise, support provided by a steering assistance is reduced or nothing is done.

Afterwards, it is determined whether the vehicle 100 starts to move. If the determination is positive, the brakes are applied on both steered wheels of the vehicle 100 and the processing rests for a predetermined amount of time, i.e. it is waited for a predetermined amount of time, for example for a few seconds. Then, the process returns back to the first "yes-or-no"-determination step as outlined above, i.e. the step of the rack position determination. Otherwise, if the vehicle 100 does not start to move, the process returns back to the beginning, i.e. the data and/or model acquisition step, or the process ends.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 100: vehicle
- 101: front left road wheel
- 102: front right road wheel
- 103: rear left road wheel
- 104: rear right road wheel
- 120: steering means
- 130: schematically indicated steering system
- 140: data processing apparatus
- 141: data processing unit
- 142: data storage unit
- 143: computer-readable storage medium
- 144: computer program
- 210: wire
- 220: steering gear electric motor
- 230: steering rack
- 231, 232: steering tie rods
- 241, 242: steering knuckle pins
- 243, 244: steering knuckles
- R1: first range
- R2: second range
- T 1: first threshold
- T2: second threshold
- T3: third threshold

## Claims

1. A method for controlling a steering system for a vehicle (100), the method comprising:
- obtaining (S310) first data indicative of a load;
- obtaining (S320) second data indicative of at least one parameter influencing the load or influencing a load capacity (T3) of the steering system;
- obtaining (S330) third data indicative of a load threshold (T2), wherein the load threshold (T2) is based on the second data; and
- comparing (S340) the first data and the third data, and causing a load mitigation measure if the first data and the third data indicate that the load equals or exceeds the load threshold (T2).

2. The method according to claim 1, wherein the first data is indicative of a road wheel angle.

3. The method according to claim 1 or 2, wherein the second data is indicative of at least one of an ambient temperature around the vehicle (100), a ground angle of a ground on which the vehicle (100) is located, a ground friction of the ground, a vehicle specification, and a vehicle condition.

4. The method according to claim 3, wherein the vehicle condition comprises at least one of a vehicle speed, a vehicle pitch, a steering wheel angle, and a steering wheel torque.

5. The method according to any of the preceding claims, wherein the load mitigation measure comprises at least one of:
- releasing a brake associated with at least one road wheel (101, 102, 103, 104) of the vehicle (100),
- limiting a range of motion of a steering system component, and
- reducing an assistance measure of the steering system.

6. The method of claim 5, wherein limiting a range of motion of a steering system component comprises limiting a range of motion of a steering rack (230).

7. The method according to any of the preceding claims, wherein the load mitigation measure is based on a vehicle speed and/or on a road wheel angle.

8. The method according to any of the preceding claims, wherein the third data is further indicative of a load warning threshold (T1), and
wherein the method further comprises comparing the first data and the third data, and causing a load mitigation transition measure if the first data and the third data indicate that the load equals or exceeds the load warning threshold (T1).

9. The method according to claim 8, wherein the load warning threshold (T1) is based on at least one of a steering wheel angle, a steering wheel speed, a steering wheel acceleration, a steering wheel torque, and a vehicle speed.

10. The method according to any of the preceding claims, further comprising causing the vehicle to stand still.

11. A data processing apparatus (140) comprising means for carrying out the method according to any of the preceding claims.

12. A computer program comprising instructions which, when the computer program is executed by a computer, cause the computer to carry out the method according to any of claims 1 to 10.

13. A computer-readable storage medium comprising instructions which, when executed by a computer, cause the computer to carry out the method according to any of claims 1 to 10.

14. A use of a load mitigation measure and/or of data indicative of at least one parameter influencing a load or indicative of at least one parameter influencing a load capacity (T1) of the steering system for operating a steering system of a vehicle (100).

15. A vehicle (100) comprising a steering system and the data processing apparatus (140) according to claim 11.
